# DEMANDE DE BREVET EUROPEEN

(11) **EP 1 848 086 A2**
(43) Date de publication de la demande: **24.10.2007**
(21) Numéro de dépôt: 06291923.8
(22) Date de dépôt: 14.12.2006
(51) Int. Cl.: H02J 7/00

(54) **Batterie et equipement pourvus d'un circuit d'autodécharge**

(30) Priorité: 19.12.2005 FR 0512880
(71) Demandeur: Sagem Défense Sécurité, 75015 Paris (FR)
(72) Inventeur: Nollet, Michel, 78590 Noisy Le Roi (FR)
(74) Mandataire: Lavialle, Bruno François Stéphane

(57) **Abrégé**

L'invention concerne une batterie (1) comprenant un circuit d'autodécharge (4) comportant un élément d'activation du circuit d'autodécharge et au moins un élément consommateur de courant (5) relié à des bornes (3) de la batterie par un organe de liaison (6) qui est sélectivement actionnable dans un état de connexion ou un état de déconnexion du circuit d'autodécharge et qui est commandé pour déconnecter le circuit d'autodécharge pour un état de charge prédéterminé inférieur à un état de charge nominal de la batterie.

L'invention a également pour objet un équipement muni d'un circuit de décharge de la batterie et des procédés de mise en condition de stockage d'une telle batterie et d'un tel équipement.

## Description

La présente invention concerne une batterie, telle qu'une batterie Li-ion, utilisable notamment pour alimenter un appareil électrique portatif et un équipement incorporant un tel appareil. L'invention a également pour objet des procédés de mise en condition de stockage d'une telle batterie et d'un tel équipement.

### ARRIERE PLAN DE L'INVENTION

Le stockage d'une telle batterie pendant une longue durée (supérieure à deux mois) nécessite de prendre certaines précautions pour éviter un endommagement de la batterie risquant d'en altérer les performances. Ces précautions concernent, outre le lieu du stockage, l'état de charge de la batterie au moment de la mise en stockage. En effet, il s'avère que la batterie risque de se détériorer si son état de charge au moment du stockage est proche de son état de charge nominal. Pour cette raison, les fabricants de batteries conseillent de stocker les batteries avec un état de charge inférieur à 50 % de l'état de charge nominal.

Il a donc été envisagé d'utiliser un dispositif spécial pour décharger la batterie préalablement au stockage. Un tel dispositif est cependant coûteux et pose des problèmes de logistique lorsque le parc de batteries est important. Un dispositif chargeur/déchargeur a également été imaginé : la structure d'un tel dispositif serait complexe et également coûteuse.

Il est par ailleurs connu des dispositifs de décharge des batteries préalablement à leur charge pour éviter l'apparition d'un effet mémoire. Ces dispositifs de décharge sont ainsi agencés pour assurer une décharge complète des batteries.

### OBJET DE L'INVENTION

Un but de l'invention est de fournir un moyen simple pour stocker les batteries sans les détériorer.

### RESUME DE L'INVENTION

A cet effet, on prévoit une batterie comprenant un circuit d'autodécharge comportant un élément d'activation du circuit d'autodécharge et au moins un élément résistif relié à des bornes de la batterie par un organe de liaison qui est sélectivement actionnable dans un état de connexion ou un état de déconnexion du circuit d'autodécharge et qui est commandé pour déconnecter le circuit d'autodécharge pour un état de charge prédéterminé qui est inférieur à un état de charge nominal de la batterie et qui est compatible avec un stockage de la batterie.

Ainsi, il suffit d'activer le circuit de décharge intégré à la batterie au début du stockage pour amener la batterie à un état de charge compatible avec le stockage, la déconnexion du circuit d'autodécharge s'opérant alors automatiquement.

De préférence, le circuit d'autodécharge comprend un comparateur relié aux bornes de la batterie pour détecter une tension et relié à l'interrupteur pour couper le circuit d'autodécharge lorsque la tension est inférieure à un seuil prédéterminé.

Ce mode de réalisation est particulièrement simple.

Avantageusement, l'état de charge prédéterminé est compris entre 20 % et 40 % de l'état de charge nominal de la batterie, et de préférence l'état de charge prédéterminé est égal à environ 30 % de l'état de charge nominal de la batterie.

Ces valeurs d'état de charge permettent de préserver la batterie quelle que soit la durée du stockage.

Selon un mode de réalisation particulier, la batterie comporte un circuit de gestion de consommation intégré et dont une partie au moins est agencé pour former le circuit d'autodécharge.

L'utilisation du circuit de gestion de consommation de la batterie comme circuit d'autodécharge permet de limiter le poids de la batterie en conférant une fonction supplémentaire de décharge au circuit de gestion de consommation déjà présent dans la batterie.

De préférence l'élément résistif est dimensionné pour permettre en deux mois une décharge de la batterie de l'état de charge nominal jusqu'à l'état de charge prédéterminé.

On sait qu'un stockage de deux mois n'altère pas une batterie ayant un état de charge supérieur à celui préconisé pour un stockage de longue durée. En laissant deux mois pour décharger la batterie, il est possible d'utiliser pour la décharge un élément résistif d'encombrement relativement réduit.

L'invention a également pour objet un équipement comprenant un appareil électrique alimenté par une batterie, l'équipement comprenant un circuit de décharge de la batterie comportant au moins un élément consommateur de courant relié à des bornes de la batterie par un organe de liaison qui est sélectivement actionnable dans un état de connexion ou un état de déconnexion du circuit de décharge et qui est commandé pour déconnecter le circuit de décharge pour un état de charge prédéterminé inférieur à un état de charge nominal de la batterie.

L'invention a en outre pour objet des procédés de mise en condition de stockage d'une batterie et d'un équipement du type de l'invention, ces procédés comprenant l'étape d'actionner l'organe de liaison dans son état de connexion préalablement au stockage.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique simplifiée d'une batterie conforme à un premier mode de réalisation de l'invention,
- la figure 2 est une vue schématique simplifiée d'une batterie conforme à un deuxième mode de réalisation de l'invention,
- la figure 3 est une vue analogue à la figure 2 d'une variante du deuxième mode de réalisation,
- la figure 4 est une vue analogue à la figure 1 d'un équipement conforme à l'invention.

### DESCRIPTION DETAILLEE DE L'INVENTION

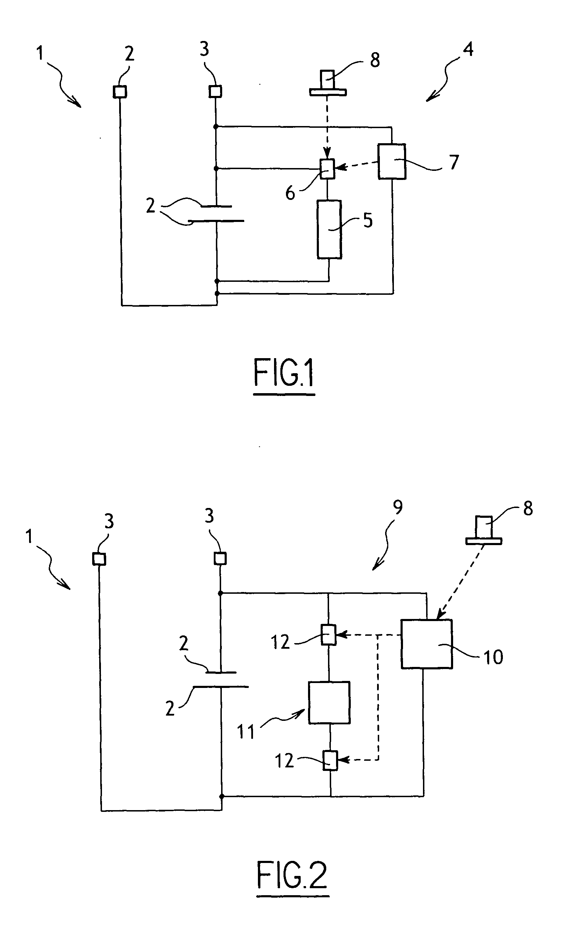

En référence à la figure 1, la batterie conforme à l'invention, généralement désignée en 1, est ici une batterie Li-ion et comprend, de façon connue en elle-même, une série d'électrodes, symbolisées en 2, associées à un électrolyte et reliées à des bornes 3 de connexion externe de la batterie 1.

Conformément à l'invention, la batterie 1 comprend un circuit d'autodécharge, généralement désigné en 4, comportant un élément résistif 5 relié aux bornes 3 par un commutateur 6 sélectivement actionnable dans un état de connexion aux bornes 3 ou un état de déconnexion du circuit d'autodécharge 4.

L'élément résistif 5 est ici une simple résistance dimensionnée pour assurer en deux mois une décharge de la batterie 1 de l'état de charge nominal de celle-ci jusqu'à un état de charge de stockage. L'état de charge de stockage est compris entre 20 % et 40 % de l'état de charge nominal de la batterie 1 et, plus précisément, égal à environ 30 % de l'état de charge nominal de la batterie 1.

Le commutateur 6 est associé à un comparateur 7 qui est relié aux bornes 3 de la batterie 1 pour détecter une tension entre celles-ci et qui est agencé pour amener le commutateur 6 de son état de connexion à son état de déconnexion. Un bouton 8 monté sur le boîtier de la batterie 1 est relié au commutateur 6 pour amener le commutateur 6 de son état de déconnexion à son état de connexion.

Lorsque la batterie 1 est en utilisation normale, c'est-à-dire qu'elle alimente un appareil ou qu'elle est en cours de charge ou de stockage pour une faible durée, le commutateur 6 est dans son état de déconnexion.

Lorsque la batterie 1 doit être stockée pour une durée supérieure à deux mois, un opérateur actionne le commutateur 6 dans son état de connexion au moyen du bouton 8 monté sur le boîtier de la batterie 1. Le bouton 8 et le commutateur 6 forment ainsi un élément d'activation du circuit d'autodécharge 4 tandis que le commutateur 6 forme également un organe de liaison de l'élément résistif 5 aux bornes 3.

La batterie 1 débite alors dans l'élément résistif 5 tant que la tension aux bornes 3 de la batterie 1 est supérieure à un seuil prédéterminé représentatif de l'état de charge de stockage.

Lorsque la tension est inférieure à ce seuil prédéterminé, le comparateur 7 commande le commutateur 6 dans son état de déconnexion pour couper le circuit d'autodécharge 4.

Pour interrompre la mise en stockage, il suffit d'actionner le bouton 8 pour ramener le commutateur 6 dans son état de déconnexion.

Les éléments identiques ou analogues à ceux précédemment décrits porteront la même référence numérique dans la description qui suit du deuxième mode de réalisation représenté à la figure 2.

Dans ce mode de réalisation, la batterie 1 comprend un circuit de gestion de consommation 9 connu en lui-même. Le circuit de gestion de consommation 9 est relié aux bornes 3 et comporte une unité de gestion 10 comportant par exemple un microprocesseur agencé pour exécuter des programmes informatiques. L'unité de gestion 10 est reliée au bouton 8 monté sur le boîtier de la batterie 1. L'unité de gestion 10 est par ailleurs reliée aux bornes 3 de manière à détecter la tension entre celles-ci et agencée pour effectuer une comparaison de cette tension à un seuil prédéterminé.

Le circuit de gestion 9 est utilisé de façon classique lors du fonctionnement normal de la batterie 1.

Lorsque le bouton 8 est actionné, l'unité de gestion 10 active un programme d'autodécharge qui utilise une partie 11 du circuit de gestion de consommation comme circuit d'autodécharge. Le programme d'autodécharge commande par exemple des commutateurs 12 qui relie la partie 11 aux bornes 3 tant que la tension aux bornes 3 est supérieure au seuil prédéterminé. Cette partie 11 comporte un élément résistif assurant une consommation de l'énergie électrique de la batterie 1 mais peut également avoir une autre fonction lorsque la batterie 1 est en utilisation normale.

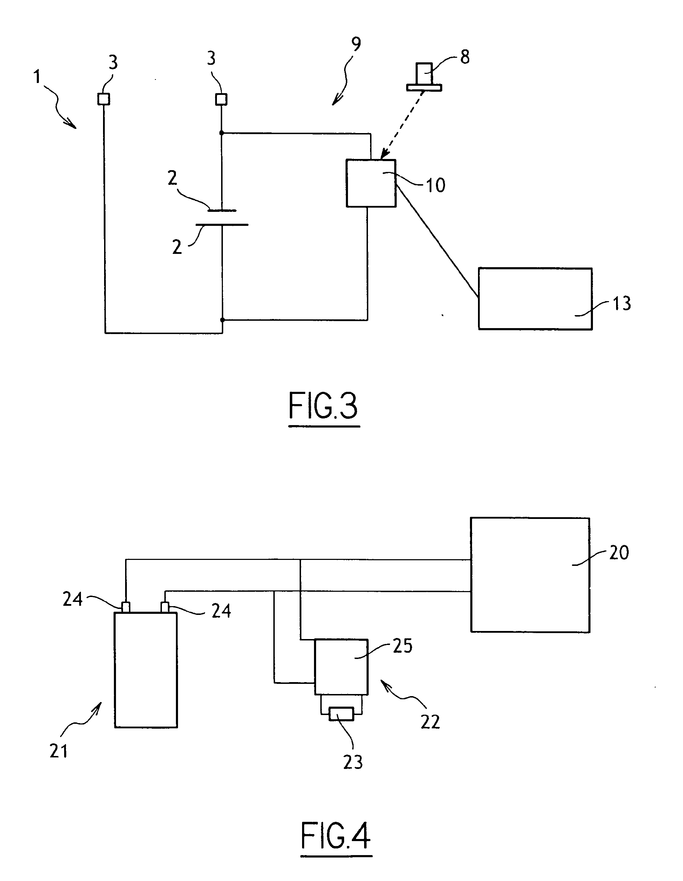

Dans la variante de la figure 3, le boîtier de la batterie 1 est équipé d'un afficheur rétro éclairé 13, connu en lui-même, relié à l'unité de gestion 10 pour afficher par exemple le niveau de charge de la batterie. Un bouton non représenté permet l'illumination de l'afficheur lorsque les conditions d'éclairement n'en permettent pas la lecture.

Dans cette variante, le programme d'autodécharge commande l'illumination de l'afficheur rétro-éclairé 13.

L'illumination de l'afficheur rétro-éclairé 13 entraîne une consommation de courant entraînant la décharge progressive de la batterie 1 et permet de savoir que l'ordre de mise en stockage a bien été pris en compte par le circuit de gestion.

Le programme d'autodécharge commande l'arrêt de l'illumination lorsque le niveau de charge de stockage est atteint.

Ceci permet d'identifier rapidement, dans le lieu de stockage des batteries, les batteries qui ont atteint leur niveau de charge de stockage. Ceci permet de faciliter la gestion des stocks lorsqu'est par exemple mise en place une stratégie premier entré premier sorti (FIFO, "First In First Out").

En variante ici, le bouton de commande d'illumination peut par exemple être utilisé également pour activer le programme d'autodécharge (appui court : illumination ; appui long : mise en stockage).

Bien entendu, l'invention n'est pas limitée aux modes de réalisation décrit mais englobe toute variante entrant dans le cadre de l'invention telle que définie par les revendications.

En particulier, le circuit d'autodécharge 4 peut avoir une structure différente de celle décrite. Ainsi, en variante du premier mode de réalisation, un interrupteur peut être monté en série avec le commutateur 6 et l'élément résistif 5 et être associé au comparateur 7 qui ne commanderait que ledit interrupteur. Le circuit d'autodécharge peut comporter plusieurs éléments résistifs en série. A noter que dans l'invention, l'élément consommateur de courant n'est pas nécessairement une résistance à proprement parler mais peut être un composant électrique ou un groupe de composants électriques présentant une résistance interne ou une caractéristique de consommation de courant. L'élément consommateur de courant peut ainsi être un indicateur lumineux tel qu'un témoin formé d'une diode électroluminescente. Il est possible de prévoir plusieurs diodes afin d'indiquer la progression de la décharge : au début toutes les diodes sont allumées avant d'être éteintes progressivement au fur et à mesure que le niveau de charge se rapproche du niveau de charge de stockage. On notera que la consommation des diodes est d'autant plus grande que le niveau de charge est élevé. Il y a ainsi une répartition de la puissance à dissiper entre plusieurs diodes. Il est également possible d'organiser la dissipation de puissance entre des éléments consommateurs de courant de types différents tels qu'un indicateur lumineux et un élément résistif.

En outre, le circuit d'autodécharge peut avoir un fonctionnement différent de celui décrit. Une mesure de la tension peut être faite lors de l'activation du circuit d'autodécharge et une durée d'autodécharge déterminée pour parvenir à l'état de charge de stockage, un organe de temporisation assurant la coupure du circuit d'autodécharge à la fin de cette durée. L'activation du circuit d'autodécharge peut également être automatique après une durée de non utilisation prédéterminée.

Si la batterie ne comporte pas de détecteur d'état de charge, la détection de charge peut être réalisée en mesurant :
- la quantité d'électricité (coulomb) fournie et reçue par la batterie,
- la résistance interne de la batterie,
- la tension de la batterie.

Il est possible de dimensionner l'élément consommateur de courant pour qu'il amène la batterie à l'état de charge de stockage dans une durée de moins de deux mois. Plus la durée est courte et plus l'élément de consommation de courant doit dissiper une puissance importante.

Il est en outre possible de prévoir des moyens pour amener automatiquement l'organe de liaison de son état de connexion à son état de déconnexion lorsque la mise en stockage est interrompue. La mise en charge de la batterie peut être l'évènement déclenchant le passage à l'état de déconnexion. La batterie peut ainsi comporter un circuit de détection de chargeur qui commande l'organe de liaison dans son état de déconnexion lorsque le chargeur est détecté. Dans le même ordre d'idée, la batterie peut incorporer un circuit de détection de l'arrivée du courant de charge ou de la montée de tension consécutive à l'application du courant de charge.

En variante, comme représenté à la figure 4, le circuit de décharge peut être externe à la batterie et faire partie d'un équipement. L'équipement comprend un appareil électrique 20 alimenté par une batterie 21, et un circuit de décharge 22 de la batterie 21. Le circuit de décharge 22 comporte au moins un élément consommateur de courant 23 relié à des bornes 24 de la batterie 21 par un organe de liaison 25 qui est sélectivement actionnable dans un état de connexion ou un état de déconnexion du circuit de décharge et qui est commandé pour déconnecter le circuit de décharge pour un état de charge prédéterminé inférieur à un état de charge nominal de la batterie 21. L'élément consommateur de courant peut être externe à la batterie et à l'appareil comme celui représenté à la figure 4, ou au contraire appartenir à l'appareil 20.

## Revendications

1. Batterie (1) comprenant un circuit d'autodécharge (4, 11) comportant un élément d'activation du circuit d'autodécharge et au moins un élément consommateur de courant (5) relié à des bornes (3) de la batterie par un organe de liaison (6) qui est sélectivement actionnable dans un état de connexion ou un état de déconnexion du circuit d'autodécharge et qui est commandé pour déconnecter le circuit d'autodécharge pour un état de charge prédéterminé qui est inférieur à un état de charge nominal de la batterie et qui est compatible avec un stockage de la batterie.

2. Batterie (1) selon la revendication 1, dans laquelle le circuit d'autodécharge (4) comprend un comparateur (7) relié aux bornes (3) de la batterie pour détecter une tension et relié à l'interrupteur pour couper le circuit d'autodécharge lorsque la tension est inférieure à un seuil prédéterminé.

3. Batterie (1) selon la revendication 1, dans laquelle l'état de charge prédéterminé est compris entre 20 % et 40 % de l'état de charge nominal de la batterie.

4. Batterie (1) selon la revendication 3, dans laquelle l'état de charge prédéterminé est égal à environ 30 % de l'état de charge nominal de la batterie.

5. Batterie (1) selon la revendication 1, comportant un circuit de gestion de consommation (9) intégré et dont une partie (11) au moins est agencée pour former le circuit d'autodécharge.

6. Batterie selon la revendication 1, comportant un indicateur lumineux relié au circuit de décharge pour former l'élément consommateur de courant.

7. Batterie (1) selon la revendication 1, dans laquelle l'élément consommateur de courant (5) est dimensionné pour permettre en deux mois une décharge de la batterie de l'état de charge nominal jusqu'à l'état de charge prédéterminé.

8. Equipement comprenant un appareil électrique (20) alimenté par une batterie (21), **caractérisé en ce que** l'équipement comprend un circuit de décharge (22) de la batterie comportant au moins un élément consommateur de courant (23) relié à des bornes (24) de la batterie par un organe de liaison (25) qui est sélectivement actionnable dans un état de connexion ou un état de déconnexion du circuit de décharge et qui est commandé pour déconnecter le circuit de décharge pour un état de charge prédéterminé inférieur à un état de charge nominal de la batterie et compatible avec un stockage de la batterie.

9. Procédé de mise en condition de stockage d'une batterie conforme à l'une quelconque des revendications 1 à 7, comprenant l'étape d'actionner l'organe de liaison dans son état de connexion préalablement au stockage.

10. Procédé de mise en condition de stockage d'un équipement conforme à la revendication 8, comprenant l'étape d'actionner l'organe de liaison dans son état de connexion préalablement au stockage.
